# EUROPÄISCHE PATENTANMELDUNG

(11) **EP 2 698 828 A1**
(43) Veröffentlichungstag der Anmeldung: **19.02.2014**
(21) Anmeldenummer: 12005933.2
(22) Anmeldetag: 17.08.2012
(51) Int. Cl.: H01L 31/042, H01L 31/048

(54) **Potentialanbindungsvorrichtung**

(71) Anmelder: Renusol GmbH, 51063 Köln (DE)
(72) Erfinder: Die Erfindernennung liegt noch nicht vor
(74) Vertreter: Graf von Stosch, Andreas

(57) **Zusammenfassung**

Die Erfindung betrifft eine Vorrichtung (10) zur elektrischen Potentialanbindung von gerahmten Modulen, die auf eine Tragprofilschiene geklemmt sind, insbesondere von Photovoltaikmodulen, wobei die Vorrichtung (10) wenigstens zwei ebene Anlageflächen (22) umfasst, die jeweils dazu ausgebildet sind, an einer Fläche eines Rahmens eines Moduls anzuliegen, wobei die Anlageflächen (22) jeweils wenigstens einen scharfkantigen Vorsprung (24) aufweisen, der aus der Ebene der Anlagefläche (22) hervorsteht. Zwischen den beiden Anlageflächen (22) ist wenigstens eine Sollbruchstelle (20) vorgesehen, die es ermöglicht, die Potentialanbindungsvorrichtung (10) in zwei Einzelteile (10a, 10b) zu zerbrechen, wobei jedes Einzelteil (10a, 10b) eine der beiden Anlageflächen (22) mit wenigstens einem scharfkantigen Vorsprung (24) aufweist.

## Beschreibung

Die Erfindung betrifft eine Vorrichtung zur elektrischen Potentialanbindung von gerahmten Modulen, die auf eine Tragprofilschiene geklemmt sind, insbesondere von Photovoltaikmodulen, wobei die Vorrichtung wenigstens zwei ebene Auflageflächen umfasst, die jeweils dazu ausgebildet sind, an einer Fläche eines Rahmens eines Photovoltaikmoduls anzuliegen, wobei die Anlageflächen jeweils wenigstens einen scharfkantigen Vorsprung aufweisen, der aus der Ebene der Anlagefläche hervorsteht.

Eine solche Potentialanbindungsvorrichtung ist bspw. aus der DE 20 2008 007 837 U1 bekannt. Eine ähnliche Vorrichtung ist zudem auch in der DE 20 2005 009 883 U1 offenbart. Derartige Potentialanbindungsvorrichtungen werden verwendet, um gerahmte Module, insbesondere gerahmte Photovoltaikmodule, zu erden und somit im Falle eines elektrischen Kurzschlusses oder lsolationsfehlers den Personenschutz bei Berührung der Module sicherzustellen. Photovoltaikmodule, oder auch andere Module, wie z.B. Module zur Warmwassergewinnung, umfassen aus Gründen des Kantenschutzes und einer möglichst verwindungsfreien Struktur in der Regel umlaufende Aluminiumrahmen. Ein Großteil der verwendeten Aluminiumrahmen wird aus optischen und haptischen Gründen mit einer Aluminiumeloxalschicht versehen. Hierbei wird durch elektrolytische Oxidation des Aluminiums eine oxidische Schutzschicht auf dem Aluminium erzeugt, welche elektrisch weitgehend nicht leitend ist. Die scharfkantigen Vorsprünge der Potentialanbindungsvorrichtung ermöglichen es, die Schutzschicht, deren Dicke oft nur wenige Mikrometer beträgt, zu durchdringen. Hierdurch ist eine separate "Durchkontaktierung" von Modulrahmen zu Modulrahmen und zu einem Erdungsnaschluss mittels z.B. Kupferleitungen nicht mehr nötig.

Die eingangs genannten, bekannten Potentialanbindungsvorrichtungen sind ausgestaltet, um zwischen zwei benachbarten Modulen verwendet zu werden. Dabei wird mittels einer Klemmvorrichtung jeweils wenigstens ein scharfkantiger Vorsprung durch die Schutzschicht des jeweiligen Rahmens der beiden benachbarten Module gedrückt, so dass die beiden Module elektrisch miteinander gekoppelt sind. Zugleich kann über die in der Regel metallische Klemmvorrichtung eine Erdungsverbindung zu den Modulrahmen bereitgestellt werden. Auch wenn die scharfkantigen Vorsprünge nur relativ klein ausgebildet sind, kann eine Erdung dennoch zuverlässig erzielt werden, wenn die gerahmten Module durch eine Vielzahl von Klemmvorrichtungen mit entsprechend vielen scharfkantigen Vorsprüngen gehalten werden.

Nachteilig bei den bisher bekannten Potentialanbindungsvorrichtungen ist jedoch, dass diese ausschließlich für den Einsatz zwischen zwei benachbarten Modulen konzipiert sind. Im Randbereich einer feld- oder matrixartigen Modulanordnung können diese Stücke nicht verwendet werden. Hier muss somit entweder auf eine Erdungsanbindung der randseitigen Rahmenabschnitte verzichtet werden, oder es werden anders ausgebildete Potentialanbindungsvorrichtungen benötigt. Im letzteren Fall muss der Monteur bei dem Zusammenbau einer matrixartigen Modulanordnung jedoch mit mehreren unterschiedlichen Potentialanbindungsvorrichtungen hantieren, was die Montage erschwert. Auch müssen verschiedene Teile in ausreichender Anzahl im Vorfeld beschafft werden, um die Montage durchführen zu können. Es sei angemerkt, dass die Montage häufig unter erschwerten Bedingungen stattfindet, wie insbesondere auf einem Schrägdach eines Gebäudes.

Es ist daher Aufgabe der vorliegenden Erfindung, die eingangs genannte Potentialanbindungsvorrichtung derart zu verbessern, dass die zuvor genannten Probleme vermieden werden können.

Gelöst wird diese Aufgabe erfindungsgemäß durch eine eingangs genannte Potentialanbindungsvorrichtung, bei der zwischen den beiden Anlageflächen wenigstens eine Sollbruchstelle vorgesehen ist, die es ermöglicht, die Potentialanbindungsvorrichtung in zwei Einzelteile zu zerbrechen, wobei jedes Einzelteil eine der beiden Anlageflächen mit wenigstens einem scharfkantigen Vorsprung aufweist.

Diese vielleicht einfach anmutende aber überaus geschickte Modifikation bekannter Potentialanbindungsvorrichtungen erlaubt dem Monteur, lediglich einen Typ von Potentialanbindungsvorrichtungen beschaffen und mit zu der Stelle der Endmontage, bspw. dem Schrägdach eines Gebäudes, nehmen zu müssen, wobei er mit diesem einen Typ sowohl die Erdung im Bereich zwischen zwei benachbarten Modulen, als auch im Randbereich einer matrixartigen Modulanordnung sicherstellen kann.

Die wenigstens eine Sollbruchstelle erlaubt es dem Monteur dabei, die erfindungsgemäße Potentialanbindungsvorrichtung von Hand - ohne übermäßigen Kraftaufwand - in die beiden Einzelteile zu zerbrechen. Die hierzu notwendige geometrische Ausgestaltung der wenigstens einen Sollbruchstelle hängt dabei von verschiedenen Faktoren ab, wie bspw. von dem verwendeten Material, der Materialdicke und der Anzahl der Sollbruchstellen. Es liegt jedoch im Können eines Fachmanns, die hierzu benötigten Parameter entsprechend auszuwählen. Soll die erfindungsgemäße Potentialanbindungsvorrichtung im Bereich zwischen zwei benachbarten Modulen einer matrixartigen Modulanordnung verwendet werden, so lässt der Monteur die Potentialanbindungsvorrichtung intakt, damit die beiden Einzelteile integral über die wenigstens eine Sollbruchstelle verbunden bleiben, so das die beiden benachbarten Module über die wenigstens eine Sollbruchstelle elektrisch miteinander in Verbindung stehen. Soll hingegen eine Erdung eines Rahmenabschnitts im Randbereich der matrixartigen Modulanordnung erzielt werden, so kann der Monteur die erfindungsgemäße Potentialanbindungsvorrichtung in die zwei Einzelteile zerbrechen und nur eines der beiden Einzelteile verwenden, welches dann die hierzu geeignete Größe aufweist.

Vorzugsweise ist die Potentialanbindungsvorrichtung zu einer Spiegelebene symmetrisch ausgebildet, wobei die wenigstens eine Sollbruchstelle in der Spiegelebene angeordnet ist. Somit erhält man beim Zerbrechen der erfindungsgemäßen Anbindungsvorrichtung zwei spiegelbildlich symmetrisch, ansonsten aber identisch ausgebildete Einzelteile, von denen eines an einem ersten Rand einer matrixartigen Modulanordnung verwendet werden kann, wohingegen das andere Einzelteil an einem dem ersten Rand gegenüberliegenden zweiten Rand der matrixartigen Modulanordnung verwendet werden kann.

Um bis zu dem beabsichtigten Zerbrechen der Potentialanbindungsvorrichtung dessen strukturelle Integrität zuverlässig sicherzustellen, ist es vorteilhaft, wenn die Vorrichtung eine Mehrzahl von Sollbruchstellen umfasst, die vorzugsweise entlang einer Linie angeordnet sind, welche somit eine Sollbruchlinie darstellt.

Besonders einfach und kostengünstig kann die Potentialanbindungsvorrichtung in großer Stückzahl hergestellt werden, wenn sie im Wesentlichen als integrales Stanz-, Biege-Teil aus Metall ausgebildet ist. Vorzugsweise kann das Material ein Federstahl sein.

Es kann zudem vorgesehen sein, dass die Vorrichtung ferner wenigstens zwei weitere ebene Anlageflächen umfasst, die jeweils ausgebildet sind, an einer Fläche, insbesondere einer Fläche eines Klemmabschnitts, einer Klemmvorrichtung anzuliegen, wobei die weiteren Anlageflächen jeweils wenigstens einen weiteren scharfkantigen Vorsprung aufweisen, der aus der Ebene der weiteren Anlagefläche hervorsteht. Vorzugsweise weist jedes Einzelteil eine der beiden weiteren Anlageflächen mit wenigstens einem weiteren scharfkantigen Vorsprung auf. Somit kann die Potentialanbindungsvorrichtung nicht nur zuverlässig eine elektrische Verbindung mit dem Rahmen eines zu klemmenden Moduls herstellen, sondern auch mit einer Klemmvorrichtung, die in diesem Fall ebenfalls eine elektrisch nicht, oder nur schlecht leitenden Schutzschicht aufweisen darf.

Jeder Anlagefläche kann jeweils eine weitere Anlagefläche zugeordnet sein, wobei vorzugsweise die Anlagefläche und die ihr zugeordnete weitere Anlagefläche zwei gegenüberliegende Seiten ein und desselben im Wesentlichen flach ausgebildeten Bauteilabschnitts, insbesondere eines Blechabschnitts, sind. In diesem Fall kann der im Wesentlichen flach ausgebildete Bauteilabschnitt Sandwich-artig zwischen der Klemmvorrichtung, insbesondere einem Klemmabschnitt der Klemmvorrichtung, und dem Rahmen des zu klemmenden Moduls eingeklemmt werden. Der wenigsten eine scharfkantige Vorsprung kann im Wesentlichen diametral in die entgegengesetzte Richtung wie der wenigstens eine weitere scharfkantige Vorsprung weisen.

Ferner können die scharfkantigen Vorsprünge und/oder die weiteren scharfkantigen Vorsprünge besonders einfach und effizient gebildet werden, indem kreuzförmige Schlitze im Material der Vorrichtung vorgesehen werden und die Materialecken an dem Kreuzungspunkt der Schlitze aus der Ebene der Anlageflächen herausgebogen werden.

Vorzugsweise ist die Potentialanbindungsvorrichtung in der Draufsicht von oben im Wesentlichen U-förmig ausgebildet ist. In diesem Fall können auch Modulanordnungen, welche bislang noch keine Potentialanbindungsvorrichtungen umfassen, mit solchen nachgerüstet werden, ohne dass die Klemmvorrichtungen, die die Module halten, völlig auf- bzw. abgeschraubt werden müssten. Vielmehr reicht es aus, die Schraubverbindung, welche in der Regel Bestandteil der Klemmvorrichtung ist, leicht zu lösen und die erfindungsgemäße Potentialanbindungsvorrichtung zwischen einem Kopfelement der Klemmvorrichtung und einer Anlagefläche des Modulrahmens zu schieben, wobei ein Schraubbolzen der Schraubverbindung in der U-förmigen Ausnehmung der Potentialanbindungsvorrichtung aufgenommen wird.

Nach einem weiteren Aspekt betrifft die vorliegende Erfindung auch eine Klemmvorrichtung zum Klemmen wenigstens eines gerahmten Moduls, insbesondere eines gerahmten Photovoltaikmoduls, gegen eine Tragprofilschiene, wobei die Klemmvorrichtung eine zuvor beschriebene Potentialanbindungsvorrichtung umfasst.

Wie dies im Stand der Technik bekannt ist, kann eine solche Klemmvorrichtung ferner ein Fußelement, das mit einer Tragprofilschiene in Kopplungseingriff bringbar ist bzw. steht und ein relativ zu dem Fußelement bewegliches Kopfelement, das wenigstens einen Klemmabschnitt zum Klemmen des wenigstens einen gerahmten Moduls gegen die Tragprofilschiene aufweist, umfassen. Das Kopfelement der Klemmvorrichtung kann durch Anziehen einer Schraubverbindung in Richtung auf das Fußelement, welches mit der Tragprofilschiene in Eingriff steht, zu bewegt werden, so dass ein Rahmenabschnitt des zu klemmenden Moduls zwischen dem Klemmabschnitt des Kopfelements und der Tragprofilschiene eingeklemmt werden kann.

Prinzipiell ist es denkbar, die Potentialanbindungsvorrichtung zwischen der Tragprofilschiene und dem Rahmenabschnitt des zu klemmenden Moduls vorzusehen, wie dies bspw. in der eingangs erwähnten DE 20 2008 007 837 U1 gezeigt ist. Um jedoch bereits bestehende matrixartige Modulanordnungen, die noch keine Potentialanbindungsvorrichtungen umfassen, mit solchen nachzurüsten, ohne hierzu einen großen Aufwand betreiben zu müssen, wird vorgeschlagen, dass die Potentialanbindungsvorrichtung derart ausgebildet ist, um zwischen dem Klemmabschnitt und dem Rahmenabschnitt des zu klemmenden Moduls angeordnet zu werden. Somit muss das zu klemmende Modul nicht von dem Tragschienenprofil abgehoben werden, um die Potentialanbindungsvorrichtung dazwischen zu platzieren.

Ein weiterer Aspekt der vorliegenden Erfindung betrifft eine Photovoltaikanlage, umfassend die zuvor beschriebene Klemmvorrichtung, sowie ferner wenigstens eine Klemmschiene und eine Mehrzahl von zu klemmenden Photovoltaikmodulen, wobei die Potentialanbindungsvorrichtung zwischen dem Klemmabschnitt und einem Rahmenabschnitt von wenigstens einem der zu klemmenden Module angeordnet ist.

Vorzugsweise umfasst die Photovoltaikanlage ferner wenigstens einen durch Zerbrechen der wenigstens einen Sollbruchstelle der zuvor beschriebenen erfindungsgemäßen Potentialanbindungsvorrichtung hergestelltes Einzelteil. Dieses Einzelteil kann, wie zuvor beschrieben, dazu verwendet werden, um auch im Randbereich einer matrixartigen Modulanordnung der Photovoltaikanlage eine elektrische Erdung der Module sicherzustellen.

Es sei an dieser Stelle angemerkt, dass mit "matrixartig" mehrere Module gemeint sind, die nebeneinander angeordnet sind, wobei auch bereits nur zwei nebeneinander angeordnete Module "matrixartig" im Sinne der vorliegenden Erfindung sind, ebenso wie beispielsweise ein Feld aus 3 x 3 Modulen.

Die Erfindung wird nachfolgend anhand der Figuren näher erläutert. Es stellt dar:

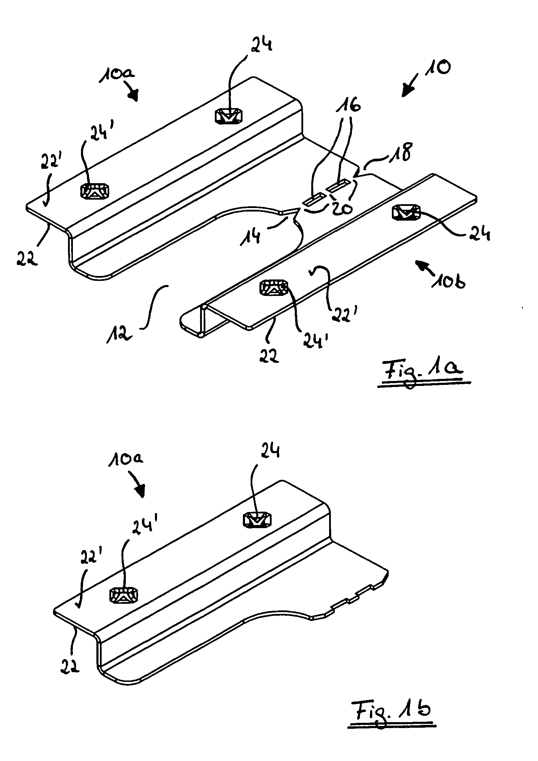

- Figur 1a: eine erfindungsgemäße Potentialanbindungsvorrichtung,
- Figur 1 b: ein Einzelteil, welches durch Zerbrechen der in Figur 1a dargestellten erfindungsgemäßen Potentialanbindungsvorrichtung hergestellt ist,
- Figur 2a: eine erste Seitenansicht einer Klemmvorrichtung, welche die in Figur 1a dargestellte erfindungsgemäße Potentialanbindungsvorrichtung umfasst,
- Figur 2b: eine zweite, gegenüber der in Figur 2a gezeigten Seitenansicht um 90° gedrehte Seitenansicht der Klemmvorrichtung,
- Figur 2c: eine dreidimensionale Ansicht der in den Figuren 2a und 2b dargestellten Klemmvorrichtung,
- Figur 3a: eine erste Seitenansicht einer zweiten Ausführungsform einer Klemmvorrichtung, welche das in Figur 1b gezeigte Einzelteil der erfindungsgemäßen Potentialanbindungsvorrichtung umfasst,
- Figur 3b: eine zweite, gegenüber der in Figur 3a gezeigten Seitenansicht um 90° gedrehte Seitenansicht der Klemmvorrichtung,
- Figur 3c: eine dreidimensionale Ansicht der in den Figuren 3a und 3b gezeigten Klemmvorrichtung,
- Figur 4a: eine Seitenansicht eines Abschnitts einer Photovoltaikanlage, welche die in den Figuren 3a bis 3c dargestellte Klemmvorrichtung umfasst, und
- Figur 4b: eine dreidimensionale Ansicht des in Figur 4a dargestellten Abschnitts der Photovoltaikanlage.

Figur 1a zeigt eine dreidimensionale Darstellung einer erfindungsgemäßen Potentialabindungsvorrichtung 10, die in der Draufsicht im Wesentlichen U-förmig mit einer U-förmigen Ausnehmung 12 ausgebildet ist. Am tiefsten Punkt der U-förmigen Ausnehmung 12 ist eine spitz zulaufende Einkerbung 14 vorgesehen. In Verlängerung der spitz zulaufenden Einkerbung 14 sind zwei weitere Ausnehmungen 16 im Material der Potentialanbindungsvorrichtung 10 vorgesehen, sowie eine weitere spitze Einkerbung 18. Zwischen den beiden Einkerbungen 14 und 18 und den beiden weiteren Ausnehmungen 16 befinden sich drei kolinear angeordnete Sollbruchstellen 20.

Wird die erfindungsgemäße Potentialanbindungsvorrichtung 10 an den Sollbruchstellen 20 zerbrochen, so entstehen zwei spiegelsymmetrische Einzelteile 10a und 10b. jedes der beiden Einzelteile, die in Figur 1a über das Material an den Sollbruchstellen 20 integral miteinander verbunden sind, umfasst an der Unterseite eine Anlagefläche 22, die dazu ausgebildet ist, an einer Fläche eines Modulrahmens anzuliegen. Ferner umfasst jedes der beiden Einzelteile 10a und 10b eine der Anlagefläche 22 gegenüberliegende weitere Anlagefläche 22', die dazu ausgebildet ist, an einer Fläche einer Klemmvorrichtung anzuliegen. In jeder Anlagefläche 22 sind kreuzförmig angeordnete Schlitze vorgesehen, wobei die Materialecken an dem jeweiligen Kreuzungspunkt der Schlitze aus der Anlagefläche herausgebogen sind und somit scharfkantige Vorsprünge 24 bilden. Ebenso sind in jeder weiteren Anlagefläche 22' kreuzförmig angeordnete Schlitze vorgesehen, wobei die Materialecken an dem jeweiligen Kreuzungspunkt der Schlitze aus der weiteren Anlagefläche 22' herausgebogen sind und somit weitere scharfkantige Vorsprünge 24' bilden. Jede Anlagefläche 22 umfasst in dem hier dargestellten Ausführungsbeispiel vier scharfkantige Vorsprünge 24 und jede weitere Anlagefläche 22' umfasst in dem hier dargestellten Ausführungsbeispiel vier weitere scharfkantige Vorsprünge 24'. Es sei jedoch angemerkt, dass auch eine andere Anzahl an scharfkantigen Vorsprüngen pro Anlagefläche vorgesehen sein kann, bzw. eine andere Anzahl an weiteren scharfkantigen Vorsprüngen pro weiterer Anlagefläche. Die scharfkantigen Vorsprünge 24 und die weiteren scharfkantigen Vorsprünge 24' weisen in diesem Ausführungsbeispiel in im Wesentlichen genau entgegengesetzte Richtungen.

In dem in Figur 1a dargestellten Ausführungsbeispiel befinden sich die Sollbruchstellen 20 in einer zu den Anlageflächen 22 parallelen, jedoch nach unten versetzten Ebene. Diese Art der Ausgestaltung der Potentialanbindungsvorrichtung ist auf die Form eines entsprechenden Kopfelements einer nachfolgend noch näher beschriebenen Klemmvorrichtung abgestimmt. Die Potentialanbindungsvorrichtung 10 der vorliegenden Ausführungsform ist als Stanzbiegeteil aus Federstahl hergestellt. Dies ermöglicht eine kostengünstige Produktion in großer Stückzahl.

Figur 1b zeigt lediglich eines der beiden Einzelteile der in Figur 1a dargestellten Potentialanbindungsvorrichtung 10. Das Einzelteil 10a wurde durch ein Zerbrechen der Sollbruchstellen 20 der Potentialanbindungsvorrichtung 10 hergestellt.

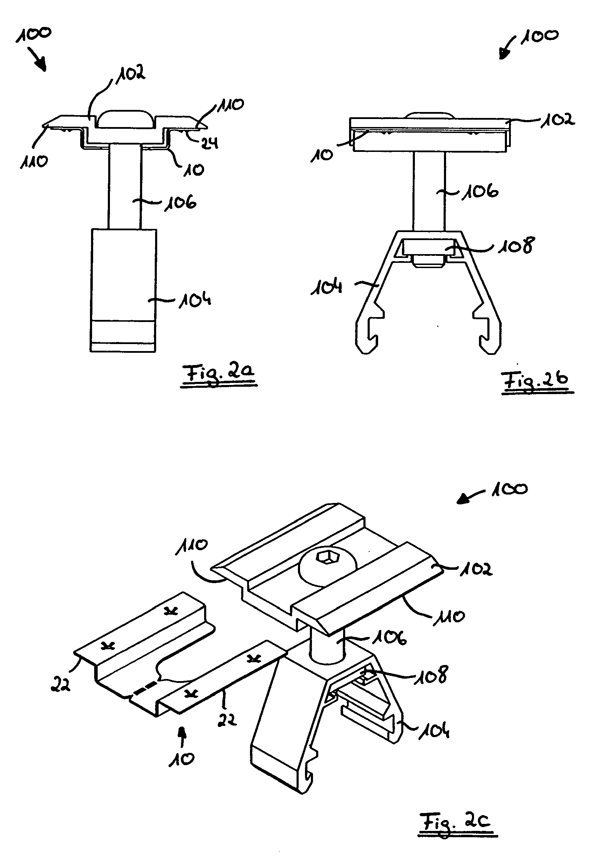

In den Figuren 2a bis 2c sind verschiedene Ansichten einer ersten Ausführungsform einer Klemmvorrichtung 100 dargestellt. Die Klemmvorrichtung 100 umfasst neben der in Figur 1a gezeigten Potentialanbindungsvorrichtung 10 ferner ein Kopfelement 102, ein Fußelement 104, einen Schraubbolzen 106 sowie eine Mutter 108. Der Schraubbolzen 106 erstreckt sich durch eine Durchgangsbohrung im Kopfelement 102 und steht in Gewindeeingriff mit der Mutter 108, welche in einem Aufnahmeabschnitt des Fußelements 104 verdrehsicher gelagert ist. Durch Anziehen des Schraubbolzens 106 kann somit das Kopfelement 102 in Richtung auf das Fußelement 104 zu bewegt werden. Das Fußelement 104 umfasst in dieser Ausführungsform widerhakenähnliche Vorsprünge, welche mit einem entsprechend ausgebildeten Profil einer hier nicht dargestellten Tragprofilschiene in Eingriff gebracht werden können. Das Kopfelement dieser Ausführungsform der Klemmvorrichtung umfasst zwei Klemmabschnitte 110, welche dazu dienen, einen Rahmenabschnitt eines zu klemmenden Moduls zwischen sich und der nicht dargestellten Tragprofilschiene festzuklemmen. Bei dieser Ausführungsform der Klemmvorrichtung handelt es sich um ein "Mittelstück", welches geeignet ist, gleichzeitig zwei einander benachbarte Module gegen die Tragschiene zu klemmen, jeweils mit einem Klemmabschnitt 110.

Erfindungsgemäß umfasst die in den Figuren 2a bis 2c die dargestellte Klemmvorrichtung eine Potentialanbindungsvorrichtung 10, deren Anlageflächen 22 bestimmungsgemäß zwischen den Klemmabschnitten 110 des Kopfelements 102 der Klemmvorrichtung 100 und dem entsprechenden Rahmenabschnitt des zu klemmenden Moduls angeordnet werden bzw. sind. Beim Anziehen des Schraubbolzens 106 werden dabei die scharfkantigen Vorsprünge 24 der Potentialanbindungsvorrichtung 10 gegen den Modulrahmen des zu klemmenden Moduls und die weiteren scharfkantigen Vorsprünge 24' gegen den Klemmabschnitt 110 der Klemmvorrichtung 100 gepresst, sodass die scharfkantigen Vorsprünge 24 die nicht oder nur schlecht leitende Schutzschicht des Modulrahmens durchdringen und somit eine leitende Verbindung zwischen dem Modulrahmen und der ebenfalls aus Metall gefertigten Klemmvorrichtung 100 herstellen. Sofern auch die Klemmvorrichtung 100 eine nicht oder nur schlecht leitende Schutzschicht aufweisen sollte, wird diese durch die weiteren scharfkantigen Vorsprünge 24' durchdrungen, um die elektrische Verbindung zuverlässig herzustellen.

Es sei an dieser Stelle allgemein angemerkt, dass, wenn die Klemmvorrichtung 100 keine Schutzschicht aufweisen sollte, alle scharfkantigen Vorsprünge 24 und 24', d.h. auch die weiteren scharfkantigen Vorsprünge 24', nach unten - d.h. zu dem zu klemmenden Modulrahmen hin - gebogen sein könnten, um eine noch bessere Kontaktierung des Modulrahmens zu erzielen.

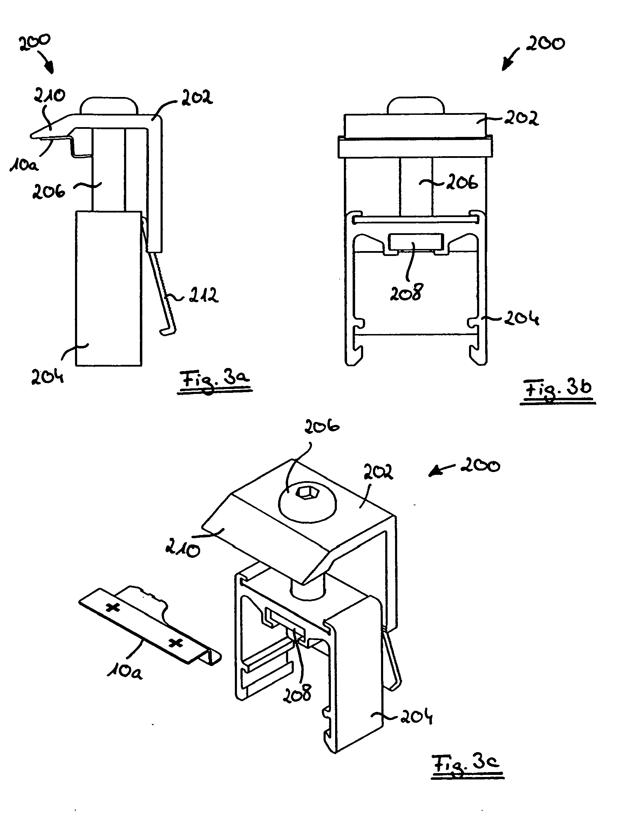

In den Figuren 3a bis 3c ist eine zweite Ausführungsform einer Klemmvorrichtung 200 dargestellt, wobei diese Klemmvorrichtung 200 speziell dazu ausgebildet ist, im Randbereich einer matrixartigen Modulanordnung verwendet zu werden. Ähnlich wie die in den Figuren 2a bis 2c dargestellte erste Ausführungsform umfasst die zweite Ausführungsform 200 ebenfalls ein Kopfelement 202, ein Fußelement 204, einen Schraubbolzen 206 und eine verdrehsicher im Fußelement 204 gelagerte Mutter 208. Da die Klemmvorrichtung 200, wie zuvor beschrieben, für den Einsatz im Randbereich einer matrixartigen Modulanordnung bestimmt ist, umfasst das Kopfelement 202 lediglich einen einzigen Klemmabschnitt 210.

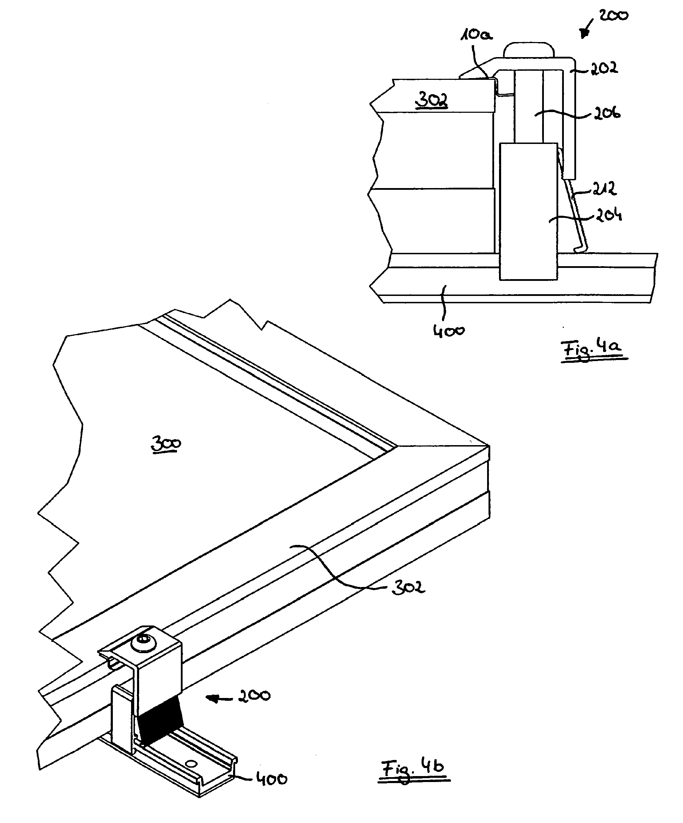

Ferner umfasst die in den Figuren 3a bis 3c dargestellte Ausführungsform der Klemmvorrichtung 200 auch nicht die gesamte in Figur 1a gezeigte Potentialanbindungsvorrichtung 10, sondern lediglich das in Figur 1b dargestellte Einzelteil 10a davon. Das Einzelteil 10a ist geeignet, zwischen dem Klemmabschnitt 210 des Kopfelements 202 und einem Abschnitt eines Rahmens 302 eines Moduls 300, beispielsweise eines Photovoltaikmoduls 300 angeordnet zu werden, wie dies in den Figuren 4a und 4b gezeigt ist. Durch Anziehen des Schraubbolzens 206 wird der Rahmen 302 des Moduls 300 zwischen einer Tragprofilschiene 400 und dem Klemmabschnitt 210 des Kopfelements 202 der Klemmvorrichtung 200 eingeklemmt, wobei zwischen dem Klemmabschnitt 210 und dem Rahmen 302 des Moduls 300 das Einzelteil 10a der erfindungsgemäßen Potentialanbindungsvorrichtung 10 angeordnet ist. Somit kann auch im Randbereich einer matrixartigen Modulanordnung zuverlässig eine Erdung des Moduls über die metallische Klemmvorrichtung 200 und die metallische Tragprofilschiene 400 erzielt werden.

Die Funktionsweise der in den Figuren 3a bis 4b gezeigten Klemmvorrichtung 200 ist im Wesentlichen identisch zu jener der in den Figuren 2a bis 2c dargestellten Klemmvorrichtung 100. Angemerkt sei lediglich, dass das Fußelement 204 der Klemmvorrichtung 200 ferner ein Gegenlagerelement 212 umfasst, welches mit dem Kopfelement 202 in Eingriff steht, um kräftetechnisch zu kompensieren, dass das Kopfelement 202 nur einseitig eine Klemmkraft auf einen Modulrahmen 302 ausübt. Ein solches Gegenlagerelement 212 ist jedoch prinzipiell aus dem Stand der Technik bereits bekannt und zudem für die vorliegende Erfindung nur von untergeordneter Bedeutung, weshalb an dieser Stelle nicht näher darauf eingegangen werden soll.

## Patentansprüche

1. Vorrichtung (10) zur elektrischen Potentialanbindung von gerahmten Modulen (300), die auf eine Tragprofilschiene (400) geklemmt sind, insbesondere von Photovoltaikmodulen (300), wobei die Vorrichtung (10) wenigstens zwei ebene Anlageflächen (22) umfasst, die jeweils dazu ausgebildet sind, an einer Fläche eines Rahmens (302) eines Moduls (300) anzuliegen, wobei die Anlageflächen (22) jeweils wenigstens einen scharfkantigen Vorsprung (24) aufweisen, der aus der Ebene der Anlagefläche (22) hervorsteht,
**dadurch gekennzeichnet, dass** zwischen den beiden Anlageflächen (22) wenigstens eine Sollbruchstelle (20) vorgesehen ist, die es ermöglicht, die Potentialanbindungsvorrichtung (10) in zwei Einzelteile (10a, 10b) zu zerbrechen, wobei jedes Einzelteil (10a, 10b) eine der beiden Anlageflächen (22) mit wenigstens einem scharfkantigen Vorsprung (24) aufweist.

2. Potentialanbindungsvorrichtung (10) nach Anspruch 1, wobei die Vorrichtung (10) zu einer Spiegelebene symmetrisch ausgebildet ist, und wobei die wenigstens eine Sollbruchstelle (20) in der Spiegelebene angeordnet ist.

3. Potentialanbindungsvorrichtung (10) nach einem der vorhergehenden Ansprüche, wobei die Vorrichtung eine Mehrzahl von Sollbruchstellen (20) umfasst, die vorzugsweise entlang einer Line angeordnet sind.

4. Potentialanbindungsvorrichtung (10) nach einem der vorhergehenden Ansprüche, wobei die Vorrichtung (10) im Wesentlichen als integrales Stanz-Biege-Teil aus Metall ausgebildet ist.

5. Potentialanbindungsvorrichtung (10) nach einem der vorhergehenden Ansprüche, wobei die Vorrichtung (10) ferner wenigstens zwei weitere ebene Anlageflächen (22') umfasst, die jeweils ausgebildet sind, an einer Fläche, insbesondere einer Fläche eines Klemmabschnitts (110), einer Klemmvorrichtung (100) anzuliegen, wobei die weiteren Anlageflächen (22') jeweils wenigstens einen weiteren scharfkantigen Vorsprung (24') aufweisen, der aus der Ebene der weiteren Anlagefläche (22') hervorsteht,
wobei vorzugsweise jedes Einzelteil (10a, 10b) eine der beiden weiteren Anlageflächen (22') mit wenigstens einem weiteren scharfkantigen Vorsprung (24') aufweist.

6. Potentialanbindungsvorrichtung (10) nach Anspruch 5, wobei jeder Anlagefläche (24) jeweils eine weitere Anlagefläche (24') zugeordnet ist, wobei vorzugsweise die Anlagefläche (24) und die ihr zugeordnete weitere Anlagefläche (24') zwei gegenüberliegende Seiten ein und desselben im Wesentlichen flach ausgebildeten Bauteilabschnitts, insbesondere eines Blechabschnitts, sind.

7. Potentialanbindungsvorrichtung (10) nach einem der vorhergehenden Ansprüche, wobei die scharfkantigen Vorsprünge (24) und/oder die weiteren scharfkantigen Vorsprünge (24') durch kreuzförmige Schlitze im Material der Vorrichtung (10) gebildet sind, wobei die Materialecken an dem Kreuzungspunkt der Schlitze aus der Ebene der Anlagefläche herausgebogen sind.

8. Potentialanbindungsvorrichtung (10) nach einem der vorhergehenden Ansprüche, wobei die Vorrichtung (10) in der Draufsicht im Wesentlichen U-förmig ausgebildet ist.

9. Klemmvorrichtung (100) zum Klemmen wenigstens eines gerahmten Moduls (300), insbesondere eines gerahmten Photovoltaikmoduls (300), gegen eine Tragprofilschiene (400), umfassend eine Potentialanbindungsvorrichtung (10) nach einem der vorhergehenden Ansprüche.

10. Klemmvorrichtung (100) nach Anspruch 9, ferner umfassend ein Fußelement (104), das mit einer Tragprofilschiene (400) in Kopplungseingriff bringbar ist, und ein relativ zu dem Fußelement (104) bewegliches Kopfelement (102), das wenigstens einen Klemmabschnitt (110) zum Klemmen des wenigstens einen gerahmten Moduls (300) gegen die Tragprofilschiene (400) aufweist.

11. Klemmvorrichtung (100) nach Anspruch 10, wobei Potentialanbindungsvorrichtung (10) ausgebildet ist, zwischen dem Klemmabschnitt (110) und einem Rahmenabschnitt (302) des zu klemmenden Moduls (300) angeordnet zu werden.

12. Photovoltaikanlage, umfassend eine Klemmvorrichtung (100) nach einem der Anspruch 10 oder 11, sowie ferner wenigstens eine Tragprofilschiene (400) und eine Mehrzahl von zu klemmenden Photovoltaikmodulen (300), wobei die Potentialanbindungsvorrichtung (10) zwischen dem Klemmabschnitt (110) und einem Rahmenabschnitt (302) von wenigstens einem der zu klemmenden Module (300) angeordnet ist.

13. Photovoltaikanlage nach Anspruch 12, ferner umfassend wenigstens ein durch Zerbrechen der wenigstens einen Sollbruchstelle (20) der Potentialanbindungsvorrichtung nach einem der Ansprüche 1 bis 9 hergestelltes Einzelteil (10a).
